# EUROPÄISCHE PATENTSCHRIFT

(11) **EP 0 503 362 B1**
(45) Veröffentlichungstag und Bekanntmachung des Hinweises auf die Patenterteilung: **03.05.1995**
(21) Anmeldenummer: 92103215.7
(22) Anmeldetag: 26.02.1992
(51) Int. Cl.: C04B 35/00, C08L 59/00

(54) **Verfahren zum Compoundieren keramischer Spritzgussmassen und Fasermassen**
Process for compounding ceramic injection-mouldable and fibre-containing materials
Procédé de préparation de matériaux ceramiques mis en forme par injection et contenant éventuellement des fibres

(30) Priorität: 09.03.1991 DE 4107691
(43) Veröffentlichungstag der Anmeldung: 16.09.1992
(73) Patentinhaber: BASF Aktiengesellschaft, 67063 Ludwigshafen (DE)
(72) Erfinder: Sterzel, Hans-Josef, W-6701 Dannstadt-Schauernheim (DE); Ebenhoech, Johan, Dr., W-6700 Ludwigshafen (DE); Ter Maat, Johan Herman Hendrik, W-6800 Mannheim 1 (DE)

(56) Entgegenhaltungen:
- EP-A- 0 131 153
- EP-A- 0 413 231
- EP-A- 0 424 739
- EP-A- 0 444 475
- US-A- 4 946 808
- US-A- 5 049 528

## Beschreibung

In neuerer Zeit gewinnt ein verfahren zur Herstellung von keramischen und metallischen Formkörpern zunehmend an Bedeutung, bei dem man einen thermoplastischen Kunststoff mit keramischen oder Metallpulvern versetzt, in einer geeigneten Maschine erhitzt, verformt und abkühlen läßt. Anschließend wird der Kunststoff z.B. durch Aufheizen beseitigt, bevor schließlich die Massen versintert werden. Bei diesem Verfahren benötigt man thermoplastische Kunststoffe, die einen Volumenanteil von mindestens 50 % an pulverförmigem Material enthalten. Erst mit diesem und höheren Füllgraden ist es möglich, aus den geformten Körpern nach Entfernen des thermoplastischen Bindemittels einigermaßen feste Grünkörper zu erhalten, die die weiteren Verfahrensschritte, vor allem das Sintern, unbeschadet überstehen.

Je höher der Füllgrad ist, desto geringer ist der Sinterschrumpf und desto besser ist die Maßhaltigkeit der Formteile. Deshalb strebt man für den Spritzguß oder die Extrusion keramischer und metallischer Teile möglichst hohe Volumenfüllgrade des Pulvers an. Dies gilt im wesentlichen auch für die Herstellung keramischer Fasern. Eine Möglichkeit, keramische Fasern herzustellen besteht darin, keramische Pulver mit einem Polymeren zu mischen, diese Mischung aufzuschmelzen und durch Düsen zu verspinnen, das Polymere durch Lösen, Pyrolyse oder Hydrolyse zu entfernen und die sogenannte "grüne" Faser zu sintern. Hierzu muß bei einem möglichst großen Volumenfüllgrad eine gute Verspinnbarkeit gewährleistet sein.

Die Herstellung solcher Massen mit einem Volumenanteil von größer gleich 50 % an keramischen oder Metallpulvern ist jedoch mit erheblichen Schwierigkeiten verbunden, wenn man diese Pulver in die Schmelze eines Thermoplasten einmischen will. Ein wesentlicher Nachteil insbesondere bei keramischen Pulvern besteht darin, daß durch Abrieb in den entsprechenden Mischapparaten wie Kneter oder Extruder die Spritzgußmassen stark kontaminiert werden und damit die daraus hergestellten Teile wenig zuverlässig sind.

In der DE-PS 32 45 184 wird ein Verfahren zur Herstellung spritzgießfähiger keramischer Massen beschrieben, bei dem keramische Pulver in einem organischen Lösungsmittel vorgelegt werden, wobei dieses Gemisch Wachse, Öle und/oder Kunststoffe enthält. Diesem Gemisch wird ein gelöster oder gasförmiger Reaktant zugesetzt, der in dem Gemisch eine Lösungspolymerisation bewirkt. Das Verfahren hat den Nachteil, daß hierbei Kunststoffe mit schwer kontrollierbaren Molmassen entstehen.

Massen mit Polyoximethylen als Binder lassen sich so überhaupt nicht herstellen, weil sich das monomere Trioxan in Gegenwart keramischer oder metallischer Pulver, die immer die Polymerisation störende OH-Gruppen tragen, nicht polymerisieren läßt.

Massen mit Polyoximethylen als Hauptbinderkomponente sind von größter Bedeutung, weil sich das Polyoximethylen in dem der Formgebung folgenden Schritt vorteilhaft unter dem Einfluß saurer Katalysatoren wie HNO₃, BF₃ oder BF₃-Addukten unterhalb der Erweichungstemperatur von 160°C schnell und ohne Rißbildung unter Depolymerisation entfernen läßt.

Mit der Patentanmeldung DE 39 31 652.1 wird ein Verfahren zur Herstellung von mit keramischen Pulvern gefüllten Massen aus thermoplastischen Kunststoffen beansprucht, bei dem man mittels eines Extruders die thermoplastischen Kunststoffe in einer aus mehreren hintereinanderliegenden Zonen bestehenden Mischstrecke in einer ersten Zone aufschmilzt, in der zweiten Zone dem geschmolzenen Kunststoff eine Suspension des keramischen Pulvers in einem organischen Lösungsmittel zudosiert und mit dem geschmolzenen Kunststoff vermischt, in der dritten Zone das Lösungsmittel unter vermindertem Druck abzieht und in der vierten Zone die das keramische Pulver enthaltende Schmelze komprimiert und extrudiert.

Dieses Verfahren wird in Extrudern durchgeführt, deren Förder-, Knet- und Mischelemente den Bedürfnissen entsprechend baukastenartig zusammengesetzt werden. Vorzugsweise sind Doppelwellenextruder genannt, weil diese selbstreinigend sind und ein schmales Verweilzeitspektrum aufweisen. Im vordersten Teil des Extruders wird das Thermoplastgranulat zudosiert. Es schließt sich die Aufschmelzzone an. Die Pulversuspension wird erst in die aufgeschmolzene Masse gepumpt. Damit wird vermieden, daß die Pulversuspension mit dem noch nicht plastifizierten Thermoplasten zusammenkommt und an dieser Stelle ein erhöhter Metallabrieb aufgrund der hohen Scherkräfte zustande kommt.

Nach dem Zusammenfluß von Schmelze und Suspension schließt sich eine Mischzone an, in welcher Suspension und Schmelze homogen gemischt werden. Danach wird das Lösungsmittel über einen oder mehrere Entgasungsdome unter vermindertem Druck abdestilliert. Es schließt sich eine Kompressionszone an, in der die weitgehend vom Lösungsmittel befreite Masse komprimiert wird, bevor sie durch Düsen extrudiert wird. Die extrudierten Stränge werden gekühlt und zu Granulat abgeschlagen.

Leider hat dieses an sich sehr vorteilhafte Compoundierverfahren auch einige Nachteile gezeigt:
Da es sich um ein kontinuierliches Verfahren handelt, müssen auch die Einsatzstoffe kontinuierlich durch Wägung dosiert werden. Da die Wägefehler technisch bedingt plus/minus 0,5 Gew.-% betragen können, schwankt der Gesamtfehler um plus/minus 1 % um den angestrebten Mittelwert. Damit kann eine geforderte Genauigkeit von plus/minus 0,2 % nicht eingehalten werden. Dies bedingt, daß eine kontinuierlich hergestellte Charge gesammelt werden, gemischt und die Mischung nochmals zum Homogenisieren extrudiert werden muß. Damit wird zusätzlicher Abrieb erhalten und die Maschinenkapazität halbiert. Zudem hat es sich gezeigt, daß die eingesetzten Pulversuspensionen sich während der Zudosierung teilweise entmischen können und damit die Dosierung verfälscht wird. Dieses Problem ist um so gravierender, als die verwendeten Lösungsmittel Dichtungen und Pumpenteile aus Elastomeren und Kunststoffen quellen und damit durch Leckagen sowie Förderschwierigkeiten die Dosierung ebenfalls erschwert wird.

Schließlich hat es sich gezeigt, daß Doppelwellenextruder nicht in der Lage sind, Massen mit mehr als 55 Vol.-% Keramik- oder Metallpulver in einem Schritt homogen zu vermischen.

Damit bestand die Aufgabe, ein Verfahren zu finden, das die aufgezeigten Nachteile vermeidet. Erfindungsgemäß werden diese Probleme dadurch gelöst, daß man die Pulver in einem Lösungsmittel, üblicherweise in Gegenwart eines Dispergators, suspendiert, gegebenenfalls mittels eines Mahlaggregats desagglomergiert, danach die als Binder dienenden Polymeren, gegebenenfalls unter Erwärmung, in der Pulversuspension löst, aus dieser Mischung den Binder, entweder durch ein als Fällungsmittel dienendes Lösungsmittel oder durch Erniedrigen der Temperatur der Mischung unter die Entmischungstemperatur von Binder und Lösungsmittel, in Form von Strängen, die anschließend zerkleinert werden, oder direkt als Granulat ausfällt, wobei die erstarrten Polymeren das Pulver sowie Lösungsmittel einschließen, und anschließend aus dem so erhaltenen Granulat mittels eines Trockners unterhalb der Erweichungstemperatur des Binders das Lösungsmittel sowie gegebenenfalls anhaftendes Nichtlösungsmittel entfernt.

Als Binder sind beispielsweise geeignet Polyacrylate, Ethylcellulose, ABS, Hydroxypropylcellulose, Polyethylen hoher und niedriger Dichte, oxidiertes Polyethylen, Celluloseacetat, Polyamide, Ethylen-Acrylsäure-Copolymerisate, Polypropylen, Celluloseacetatbutyrat, Polystyrole, Polybutylen, Polysulfone, Polyethylenglylkole und Polyethylenoxide. Besonders geeignet sind Polyoximethylen und dessen Copolymerisate sowie Mischungen aus Polyoximethylencopolymerisaten mit homopolymerem Poly-1.3-Dioxolan, Poly-1,3-Dioxan oder Poly-1,3-Dioxepan.

Als keramische Pulver kommen beispielsweise die Oxide, Nitride und Carbide der Elemente der 3. und/oder 4. Haupt- oder Nebengruppe des Periodischen Systems mit Schmelz- oder Zersetzungstemperaturen oberhalb 1000°C in Frage, z.B. vorzugsweise Si-Carbid, Si-Nitrid, Aluminiumoxid oder Zirkoniumdioxide, Bornitrid BN, Wolframcarbid WC, Borcarbid B₄C oder Titancarbid. Die keramischen Pulver haben zweckmäßig ein Körnung von kleiner gleich 5 »m, vorzugsweise von 0,2 bis 2 »m. Der Ausdruck keramische Pulver soll auch Whisker oder faserförmige Stoffe mit Längen von 0,01 bis 1 mm umfassen, beispielsweise auf der Basis von Aluminiumoxid, Siliciumcarbid oder Siliciumnitrid sowie Metallpulver, die bindenden Charakter haben wie Cobalt oder Nickel. Als Metallpulver kommen alle als Wirkstoff relevanten Metalle oder Legierungen in Betracht, hauptsächlich Eisen, Nickel, Cobalt, Chrom, Vanadium, Kupfer, Molybdän, Wolfram. Die Metallpulver werden sowohl als Mischung reiner Metallpulver sowie als Legierungen oder als Mischung von reinen Metallen mit Legierungen eingesetzt. Ihre Korngrößen betragen 1 bis 100 »m, vorzugsweise 2 bis 30 »m. Zur "Dispersionshärtung" können die Metallpulver auch keramische Pulver oder keramische Fasern enthalten. Diese Pulver werden in einem organischen Lösungsmittel suspendiert, das den jeweils eingesetzten Kunststoff zu lösen vermag. Beispiele sind Decalin oder xylol für Polyethylen und Polyethylen/Wachs-Mischungen, Diglykoldimethylether für Polystyrol und Copolymeren mit Acrylnitril oder Benzylalkohol für Polyethylenterephthalat, Polybutylenterephthalat, Polyamid 6 oder -6,6 oder Polysulfone sowie Diglykoldimethylether oder Ethylenglykolmonobutylether oder Diglykolmonomethylether für Polyoximethylene und Polyformale.

Üblicherweise werden bei der Herstellung der Suspensionen die keramischen Pulver einer desagglomerierenden Behandlung unter der Einwirkung von Scherkräften, z.B. in Kugelmühlen, gegebenenfalls in Gegenwart von Dispergierhilfsmitteln unterzogen. Der Volumenanteil der Pulver im Suspensionsmittel ergibt sich durch Optimierung der Bedingungen: Einerseits soll er möglichst groß sein, um möglichst wenig Lösungsmittel abdestillieren zu müssen, andererseits darf die Viskosität der Suspension den Desagglomerationsvorgang nicht behindern.

Es hat sich gezeigt, daß Volumengehalte von 10 bis 60 %, vorzugsweise von 25 bis 35 %, zu optimalen Ergebnissen führen. Falls mit Volumengehalten unterhalb von 25 % desagglomeriert werden muß, kann die Suspension durch teilweises Verdampfen des Lösungsmittels aufkonzentriert werden. Es ist auch möglich, die Desagglomerierung in einem niedrigsiedenden Suspensionsmittel oder Suspensionsmittelgemisch bei niedrigen Volumengehalten durchzuführen und danach ein höhersiedendes, mit dem niedrigsiedenden Suspensionsmittel mischbares Suspensionsmittel zuzusetzen und das oder die niedrigsiedenden Suspensionsmittel abzudestillieren.

Diese Vorgehensweise ist besonders dann angebracht, wenn das eigentliche Suspensionsmittel eine erhöhte Dichte und/oder Viskosität aufweist und damit die Desagglomeration durch Mahlen erschwert oder generell die Dispergierung im eigentlichen Suspensionsmittel schlecht durchführbar ist.

Mit einer besonderen Variante des Verfahrens wird die Dispergierung durchgeführt, indem das Suspensionsmittel in einem Rührkessel vorgelegt wird, danach der Dispergator im Suspensionsmittel gelöst wird und daran folgend das keramische oder metallische Pulver langsam unter Rühren zugegeben wird und dabei die Suspension im Kreis über eine Pumpe aus dem Rührkessel durch eine Rührwerkskugelmühle und aus dieser zurück in den Rührkessel gefördert wird. Nach genügend langer Dispergierung wird der Pumpen- und Mühlenkreis mit reinem Suspensionsmittel freigespült und damit das gesamte Pulver in den Rührkessel gespült. Danach werden der Binder oder die Binderkomponenten in den Rührkessel eingewogen und unter Erwärmung des Ansatzes gelöst.

Damit ist sichergestellt, daß alle eingewogenen Mischungskomponenten quantitativ in der Mischung vorhanden sind und die Massenanteile mit mindestens plus/minus 0,1 Gew.-% Genauigkeit im Ansatz vorhanden sind.

Pumpe und Mühle sind abriebfest ausgekleidet oder sie sind aus abriebfesten Materialien, vorzugsweise ultrahochmolekularem Polyethylen gefertigt oder damit ausgekleidet. Da im Rührkessel, bedingt durch die Anwesenheit des Suspensions- und Lösungsmittels, die Viskosität der Mischung wesentlich geringer als die der Binderschmelze ist, wird die Bildung von Abrieb weitestgehend vermieden. Außerdem liegen dort weit geringere Schergefälle als in einem Extruder vor, was ebenfalls zu dem stark verringerten Abrieb führt. Schließlich umhüllt die Binderlösung die desagglomerierten Pulver unabhängig vom Volumenanteil des Pulvers, so daß beliebige Volumenanteile an Pulver, auch oberhalb 55 Vol.-% eingestellt werden können.

Zum Einmischen des Thermoplasten in die Pulversuspension eignen sich, abhängig von der Viskosität der Mischung, die hauptsächlich durch den Anteil an Lösungsmittel bestimmt wird, insbesondere dynamische Mischer wie Rührkessel, Planetenmischer, Schaufelmischer, Zweiwellenmischer oder Kneter.

Nach Auflösung des oder der Binderpolymeren wird aus der Mischung der Binder ausgefällt, wobei das Pulver und Lösungsmittel eingeschlossen werden, und granuliert. Fällung und Granulierung werden entweder im Mischer oder außerhalb durchgeführt. Im ersten Fall wird der Binder durch Zugabe eines als Fällungsmittel dienenden Lösungsmittels oder durch Erniedrigung der Temperatur der Mischung unter die Entmischungstemperatur von Binder und Lösungsmittel ausgefällt, wobei die Mischung durch ständiges Rühren zu einem Granulat zerkleinert wird, und anschließend unter vermindertem Druck aus dem so erhaltenen Granulat unterhalb der Erweichungstemperatur des Binders das Lösungsmittel sowie gegebenenfalls anhaftendes Nichtlösungsmittel entfernt. Im zweiten Fall wird die Mischung durch Düsen, gegebenenfalls unter Druck, aus dem Rührkessel ausgefahren und entweder in einem Sprühturm granuliert und getrocknet oder auf ein Kühlband bzw. in eine Rinne in der ein Fällungsmittel, vorzugsweise Wasser, fließt, gedrückt, wobei sich die auslaufenden Stränge verfestigen. Diese erstarrten Stränge werden anschließend durch ein rotierendes Messer zerkleinert, das so erhaltene Granulat in einem Sieb aufgefangen, wobei anhaftendes Lösungsmittel und gegebenenfalls Fällungsmittel abgetrennt werden, und in einem Trockner, bevorzugt in einem Vakuumtaumeltrockner vom Rest des oder der Lösemittel befreit und diese dabei durch Kondensation rückgewonnen.

Das so erhaltene poröse Granulat kann anschließend kompaktiert und nachhomogenisiert werden, vorzugsweise durch Aufschmelzen und Granulieren mittels eines Scherwalzenextruders.

### Beispiel 1 (Vergleichsbeispiel)

Mittels eines Zweiwellenextruders werden 5.0 kg/h Polystyrol bei 250°C aufgeschmolzen und durch Düsen extrudiert. Das eingesetzte Polystyrol ist durch einen Schmelzindex von 24 g/10 min, gemessen nach DIN 53 735 bei 200°C und 21,6 kg Auflagegewicht, charakterisiert. An der gleichen Stelle, wo das Polystyrol-Granulat zudosiert wird, wird in steigenden Mengen bei 400°C getrocknetes Siliciumnitrid-Pulver (Korngröße 0,5 bis 1,5 um) mit einem Eisengehalt von 0,011 Gew.-% zudosiert. Auf das Siliciumnitrid-Pulver waren 2 Gew.-% Stearinsäure als Dispergator aufgebracht worden. Bei einer Dosierung von 10,5 kg/h, die einem Volumenanteil von 40 % entspricht, ist das Drehmoment an der Extruderwelle so groß geworden, daß die Dosierung nicht gesteigert werden kann. In einem zweiten Lauf wird das Granulat mit 40 Vol.-% Siliciumnitrid als Ausgangsmaterial eingesetzt und mit weiterem Siliciumnitrid vermischt. Der Versuch muß bei 47 Vol.-% Siliciumnitrid abgebrochen werden, weil das maximale Drehmoment erreicht ist. Der Eisengehalt beträgt im Durchschnitt 0,025 Gew.-%, einzelne Granulatkörner enthielten abgeriebene Eisenteile mit 50 bis 100 um Größe.

### Beispiel 2 (Vergleichsbeispiel)

Mittels eines Zweiwellenextruders werden 6 kg/h Polyoximethylen bei 180°C aufgeschmolzen und durch Düsen extrudiert. Das verwendete Polyoximethylen ist durch einen Schmelzindex von 13 g/10 min, gemessen nach DIN 53 735 bei 190°C und 2,16 kg Auflagegewicht, charakterisiert. An der gleichen Stelle, wo das Polyoximethylen-Granulat zudosiert wird, wird in steigenden Mengen bei 400°C getrocknetes Siliciumnitrid-Pulver mit einem Eisengehalt von 0,011 Gew.-% (Typ LC 10) zudosiert. Auf das Siliciumnitrid-Pulver waren 3 Gew.-% Polyethylenoxid der Molmasse 400 als Dispergator aufgebracht worden.

Bei einer Dosierung von 9,6 kg/h, die einem Volumenanteil von 42 % Siliciumnitrid-Pulver entspricht, ist das maximale Drehmoment des Extruders erreicht worden. In einem zweiten Lauf wird das so hergestellte Granulat als Ausgangsmaterial eingesetzt und mit weiterem Siliciumnitrid vermischt. Der Versuch muß bei 50 Vol.-% Siliciumnitrid abgebrochen werden, weil das maximale Drehmoment erreicht ist. Der Eisengehalt beträgt 0,028 Gew.-% im Durchschnitt. Einzelne Granulatkörner enthalten abgeriebene Eisenteilchen bis 80 um Größe.

### Beispiel 3 (erfindungsgemäß)

In einem 5-l-Doppelmantelgefäß mit Bodenablaß, Ankerrührer und Rückflußkühler werden unter N₂-Abdeckung 2 l Ethylenglykolmonobutylether vorgelegt, darin 7,5 g Poly-(hydroxystearinsäure)stearat als Dispergator gelöst und unter Rühren zunächst 7,5 kg WC-Pulver einer mittleren Korngröße von 1 »m, das als Sinteradditiv 8 % Cobalt enthält, dann 111 g Poly-1,3-Dioxepan und 444 g Polyoxymethylen eingetragen. Das Gemisch wird auf 160°C erwärmt, wobei die Polymeren aufschmelzen und sich im Ethylenglykolmonobutylether lösen. Die verdünnte Schmelze wird bei dieser Temperatur 2 Stunden gerührt um das Pulver möglichst homogen zu dispergieren und anschließend in ein Eiswasserbad abgelassen. Der Hauptteil des Lösungsmittels wird in der erstarrten Masse eingeschlossen. Nur etwa 1 % diffundieren in das Wasser. Das Compound wird bei 110°C und 250 mbar getrocknet. Eisenteilchen sind nicht nachweisbar.

### Beispiel 4 (erfindungsgemäß)

In einem 70 l Kessel mit Bodenablaß, Ankerrührer und Kondensatkühler, der als Vorlage für einen geschlossenen Mühlenkreis dient, werden unter N₂-Abdeckung 27 l Ethylenglykolmonobutylether vorgelegt, darin 300 g Poly-(hydroxystearinsäure)-stearat als Dispergator gelöst und unter Rühren 27,9 kg Si₃N₄-, 1,5 kg Y₂O₃- und 0,6 kg Al₂O₃-Pulver eingetragen. Diese Suspension wird 2 Stunden lang durch eine Mohnopumpe im Kreis gepumpt und beim Durchgang durch die Rührwerkskugelmühle desagglomeriert. Anschließend werden Pulverablagerungen aus Mühle und Pumpe mit reinem Lösungsmittel in den Vorlagekessel gespült und der Mühlenkreis abgesperrt. In den Kessel werden 1,65 kg Poly-1,3-Dioxepan und 6,63 kg Polyoxymethylen eingewogen und das Gemisch unter Rühren auf 160°C erwärmt, wobei die Polymeren aufschmelzen und sich im Ethylenglykolmonobutylether lösen. Die verdünnte Schmelze wird zur Homogenisierung 2 Stunden weitergerührt, anschließend auf ein von unten mit Wasser gekühltes Band abgelassen und durch ein rotierendes Messer kontinuierlich zerkleinert. Das Granulat wird bei 100°C und 250 mbar in einem Taumeltrockner vom Lösungsmittel befreit.

Dieses Compound wird auf dem Scherwalzenextruder nachhomogenisiert. Es läßt sich dann durch eine 70 »m Düse verspinnen. Der Fe-Gehalt beträgt 0,012 Gew.-%. Eisenteilchen sind nicht nachweisbar.

### Beispiel 5 (erfindungsgemäß)

181,5 g eines mit 5 % Y₂O₃ stabilisierten ZrO₂ werden in einer Planetenmühle in 70 ml Butylacetat und 3,62 g Solsperse 17000 (ICI) als Dispergator 4 Stunden lang gemahlen. Diese Suspension wird in einen 1-l-Kolben mit Rührer, Kühler und Kondensatabscheider gebracht, 460 ml Diethylenglykoldimethylether, 27,7 g Polyoxymethylen und 6,9 g Poly-1,3-Dioxepan zugegeben und die Mischung auf 160°C erwärmt. Das Butylacetat destilliert ab, die Polymeren schmelzen und lösen sich im Diethylenglykoldimethylether. Die verdünnte Schmelze wird bei dieser Temperatur 2 Stunden gerührt um das Pulver möglichst homogen zu dispergieren und anschließend in ein Eiswasserbad abgelassen. Die erstarrte Masse wird bei 110°C und 250 mbar getrocknet und kann anschließend zu Fasern versponnen werden. Eisenteilchen sind nicht nachweisbar.

### Beispiel 6 (erfindungsgemäß)

In einem diskontinuierlichen, evakuierbaren Discotherm-Labormischer mit 770 ml Inhalt werden unter N₂ 100 ml Ethylenglykolmonobutylether vorgelegt, darin 2,1 g Poly-(hydroxystearinsäure)-stearat als Dispergator gelöst und unter Rühren zunächst 417 g Al₂O₃-Pulver einer mittleren Korngröße von 0,8 um, dann 22,4 g Poly-1,3-Dioxepan und 85 g Polyoxymethylen eingetragen. Das Gemisch wird auf 165°C erwärmt, wobei die Polymeren aufschmelzen und sich im Ethylenglykolmonobutylether lösen. Die verdünnte Schmelze wird bei dieser Temperatur 1 Stunde mit 20 U/min gerührt um das Pulver möglichst homogen zu dispergieren, wobei ein Drehmoment von 12 bis 15 Nm auftritt. Danach wird die Temperierung des Mischers auf 100°C zurückgestellt und gleichzeitig, bei einer Wellendrehzahl von 10 U/min, durch stufenweises Vermindern des Drucks auf 50 mbar das Lösungsmittel abdestilliert, wobei durch die Verdampfungsenthalpie die Innentemperatur schnell auf 90°C absinkt. Bei einer Produkttemperatur von ca. 150°C verfestigt sich die Masse und wird durch die Mischbarren zerkleinert, wobei kurzzeitig Drehmomente von bis zu 100 Nm auftreten. Das trockene Granulat bildet keine Krusten an der Welle oder der Gehäusewand und kann fast ohne Rückstand aus dem Mischer abgefüllt werden. Der Fe-Gehalt beträgt 0,013 Gew.-%. Eisenteilchen sind nicht nachweisbar.

### Beispiel 7 (erfindungsgemäß)

In einem 70 l Kessel mit Bodenablaß, Ankerrührer und Kondensatkühler werden unter N₂-Abdeckung 27 l Ethylenglykolmonobutylether vorgelegt und unter Rühren 8,1 kg Polyoxymethylen, 0,9 kg eines Polyethylens, das durch einen Schmelzindex nach DIN 53 735 von 20 g/10 min bei 190°C gekennzeichnet ist, und 70,8 kg eines Carbonyleisenpulvers einer mittleren Korngröße von 5 »m eingetragen und die Mischung auf 160°C erwärmt, wobei die Polymeren aufschmelzen und sich das Polyoxymethylen im Ethylenglykolmonobutylether löst. Die verdünnte Schmelze wird bei dieser Temperatur 2 Stunden weitergerührt um das Eisenpulver und das Polyethylen homogen zu verteilen und anschließend auf ein von unten mit Wasser gekühltes Band ausgefahren und durch ein rotierendes Messer kontinuierlich zerkleinert. Das Granulat wird bei 100°C und 250 mbar N₂ in einem Taumeltrockner vom Lösungsmittel befreit.

Dieses Produkt wird über einen Zweiwellenextruder nachhomogenisiert. Es läßt sich dann durch eine 70 »m Düse verspinnen.

### Beispiel 8 (erfindungsgemäß)

In einem vakuumdichten 8 l Z-Kneter werden unter N₂-Abdeckung 2 l Ethylenglykolmonobutylether, 1338 g Polyoxymethylen, 149 g eines Polyethylens, das durch einen Schmelzindex nach DIN 53 735 von 20 g/10 min bei 190°C gekennzeichnet ist, und 12,0 kg eines gasverdüsten Edelstahlpulvers einer Korngröße von unter 38 »m eingewogen und die Mischung bei einer Wellendrehzahl von 30 U/min auf 160°C erwärmt, wobei die Polymeren aufschmelzen und sich das Polyoxymethylen im Ethylenglykolmonobutylether löst. Die Schmelze wird bei dieser Temperatur 2 Stunden geknetet um eine homogene Verteilung des Polyethylens im Polyoxymethylen und des Pulvers in der Polymermatrix zu erreichen, wobei ein Drehmoment von 25 bis 30 Nm auftritt. Anschließend wird die Temperierung des Kneters auf 100°C zurückgestellt und gleichzeitig, bei einer Wellendrehzahl von 10 U/min, das Lösungsmittel bei 50 mbar abdestilliert, wobei durch die Verdampfungswärme die Innentemperatur schnell auf 90°C absinkt. Bei einer Produkttemperatur von ca. 150°C verfestigt sich die Masse und wird durch die Knetschaufeln gebrochen, wobei kurzzeitig Drehmomente von 120 Nm auftreten. Das Lösungsmittel kann innerhalb von 2 Stunden völlig entfernt werden. Man erhält ein poröses Granulat, das sich durch eine 70 »m Düse verspinnen läßt.

## Patentansprüche

1. Verfahren zur Herstellung von mit Pulvern gefüllten Massen aus thermoplastischen Kunststoffen, dadurch gekennzeichnet, daß man
a) die Pulver in einem Lösungsmittel suspendiert,
b) danach die thermoplastischen Kunststoffe in der Suspension löst,
c) aus der dabei erhaltenen Mischung die thermoplastischen Kunststoffe zusammen mit dem Pulver entweder durch ein Fällungsmittel oder durch Erniedrigen der Temperatur der Mischung unter die Entmischungstemperatur von thermoplastischem Kunststoff und Lösungsmittel ausfällt und
d) anschließend aus der ausgefallenen Mischung das Lösungsmittel und gegebenenfalls das Fällungsmittel durch Trocknen bei Temperaturen unterhalb der Erweichungstemperatur des thermoplastischen Kunststoffs entfernt.

2. Verfahren nach Anspruch 1, dadurch gekennzeichnet, daß man als Pulver Oxide, Nitride, Carbide und/oder Silicide mit Schmelz- oder Zersetzungstemperaturen oberhalb 1000°C oder Metallpulver einsetzt.

3. Verfahren nach den Ansprüchen 1 bis 2, dadurch gekennzeichnet, daß die Suspensionen einen Volumenanteil von 10 bis 60 % an Pulvern aufweisen.

4. Verfahren nach den Ansprüchen 1 bis 3, dadurch gekennzeichnet, daß die Suspension auch Whisker oder Fasern mit einer Länge von 0,01 bis 1 mm oder plättchenförmige Teilchen enthält.

5. Verfahren nach den Ansprüchen 1 bis 4, dadurch gekennzeichnet, daß als Binder Polyoximethylen oder Polyoximethylencopolymere als solche oder in Mischung mit Poly-1.3-Dioxepan, Poly-1.3-Dioxan oder Poly-1.3-Dioxolan eingesetzt werden und daß als Suspensions- und Lösungsmittel Diglykoldimethylether, Diglykolmonomethylether oder Ethylenglykolmonobutylether oder Mischungen davon eingesetzt werden.

## Claims

1. A process for preparing a powder-filled composition based on a thermoplastic, which comprises
a) suspending the powder in a solvent,
b) then dissolving the thermoplastic in the suspension,
c) precipitating the thermoplastic from the resulting mixture together with the powder either by means of a coagulant or by reducing the temperature of the mixture to below the separation temperature of thermoplastic and solvent, and
d) then removing the solvent and any coagulant from the precipitated mixture by drying at below the softening temperature of the thermoplastic.

2. A process as claimed in claim 1, wherein the powder used is an oxide, nitride, carbide or silicide having a melting or decomposition temperature above 1000°C or a metallic powder.

3. A process as claimed in claim 1 or 2, wherein the suspension has a powder volume content of from 10 to 60 %.

4. A process as claimed in any of claims 1 to 3, wherein the suspension also contains whiskers or fibers from 0.01 to 1 mm in length or flaky particles.

5. A process as claimed in any of claims 1 to 4, wherein the binder used is polyoxymethylene or a polyoxymethylene copolymer as such or mixed with poly-1,3-dioxepane, poly-1,3-dioxane or poly-1,3-dioxolane and the suspension medium/solvent used is diglycol dimethyl ether, diglycol monomethyl ether or ethylene glycol monobutyl ether or a mixture thereof.

## Revendications

1. Procédé de fabrication de masses en matières thermoplastiques, chargées de poudres, caractérisé en ce que
a) on met les poudres en suspension dans un solvant,
b) on dissout ensuite les matières thermoplastiques dans la suspension,
c) à partir du mélange ainsi obtenu, on sépare par précipitation les matières thermoplastiques en même temps que la poudre, soit à l'aide d'un agent de précipitation, soit par abaissement de la température du mélange en dessous de la température de démixtion de la matière thermoplastique et du solvant et
d) on élimine ensuite du mélange précipité, le solvant et éventuellement l'agent de précipitation par séchage à des températures inférieures au point de ramollissement de la matière thermoplastique.

2. Procédé suivant la revendication 1, caractérisé en ce que, à titre de poudres, on utilise des oxydes, des nitrures, des carbures et/ou des silicures avec des températures de fusion ou de décomposition supérieures à 1000°C, ou des poudres de métaux.

3. Procédé suivant l'une quelconque des revendications 1 et 2, caractérisé en ce que les suspensions présentent une fraction volumique en poudres de 10 à 60%.

4. Procédé suivant l'une quelconque des revendications 1 à 3, caractérisé en ce que la suspension contient également des barbes ou des fibres d'une longueur de 0,01 à 1 mm, ou des particules en forme de plaquettes.

5. Procédé suivant l'une quelconque des revendications 1 à 4, caractérisé en ce que l'on utilise, à titre de liant, du polyoxyméthylène ou des copolymères de polyoxyméthylène, tels quels ou en mélange à du poly-1,3-dioxépanne, du poly-1,3-dioxanne, ou du poly-1,3-dioxolanne et en ce que l'on utilise, à titre d'agents de mise en suspension et de solvants, l'éther diméthylique du diglycol, l'éther monométhylique du diglycol, ou l'éther monobutylique de l'éthylèneglycol, ou des mélanges de ces produits.
